(19) Europäisches Patentamt
European Patent Office
Office européen des brevets

(11) Veröffentlichungsnummer: **0 179 752**
**B1**

(12) # EUROPÄISCHE PATENTSCHRIFT

(45) Veröffentlichungstag der Patentschrift: **04.05.88**

(51) Int. Cl.⁴: **C 21 B 13/02**

(21) Anmeldenummer: **85890171.3**

(22) Anmeldetag: **01.08.85**

(54) **Verfahren zur Direktreduktion von eisenoxidhältigen Materialien.**

(30) Priorität: **16.08.84 AT 2633/84**

(43) Veröffentlichungstag der Anmeldung: **30.04.86 Patentblatt 86/18**

(45) Bekanntmachung des Hinweises auf die Patenterteilung: **04.05.88 Patentblatt 88/18**

(84) Benannte Vertragsstaaten: **BE CH DE FR GB IT LI LU NL SE**

(56) Entgegenhaltungen:
**EP-B- 0 010 627**
**AT-B- 370 134**
**DE-A- 2 741 805**
**DE-A- 3 104 405**
**DE-C- 1 017 314**
**US-A- 4 234 169**

(73) Patentinhaber: **VOEST-ALPINE Aktiengesellschaft**
**Muldenstrasse 5**
**A-4020 Linz (AT)**

(72) Erfinder: **Die Erfinder haben auf ihre Nennung verzichtet**

(74) Vertreter: **Wolfram, Gustav, Dipl.-Ing.**
**Schwindgasse 7 P.O. Box 205**
**A-1041 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 179 752 B1

**Beschreibung**

Die Erfindung betrifft ein Verfahren zur Direktreduktion von eisenoxidhältigen Materialien mittels eines in einem Gasgenerator durch Umsetzung von Kohle mit Sauerstoff und gegebenenfalls Wasserdampf unter Zusatz von Schwefelakzeptoren in einem Wirbelbett hergestellten Generatorgases, wobei das Generatorgas nach Abscheidung von mitgeführten Feststoffteilchen einem Direktreduktionsschachtofen zugeführt und wenigstens ein Teil des aus dem Direktreduktionsschachtofen abgezogenen Obergases nach einer Naßentstaubung verdichtet und zum Gasgenerator rückgeführt wird.

Ein Verfahren dieser Art ist in der AT-B-370 134 beschrieben, wobei Kohle, die auf eine ausreichend geringe Teilchengröße — vorzugsweise weniger als 10 mm — zerkleinert ist, in einem Gasgenerator mit Wasserdampf und Sauerstoff unter Bildung eines Wirbelbettes umgesetzt wird. Die Reaktionstemperatur liegt dabei unterhalb der Schlackenschmelztemperatur; die Schlacken- oder Ascheteilchen fallen in agglomerierter fester Form aus dem Wirbelbett und müssen mittels eines aufwendigen Entladesystems aus dem Reaktor entfernt werden. Darüber hinaus ist zum Einhalten der gewünschten Aschenkonsistenz eine sehr genaue Temperaturführung notwendig.

Das im Reduktionsschachtofen erzeugte Obergas wird wenigstens zum Teil in den Gasgenerator rückgeführt, nachdem es naßentstaubt, gekühlt und saure Gase, wie $CO_2$ und $H_2S$ in einer Entsäuerungsanlage entfernt wurden. Die sauren Gase werden verworfen. Ein anderer Teil des entsäuerten Obergases wird nach Wiedererhitzung zum Direktreduktionsschachtofen rückgeführt.

Durch die Entfernung des $CO_2$ aus dem Obergas wird die Massen- und Wärmebilanz des Verfahrens ungünstig beeinflußt, weil entsprechende Mengen an Kohle und Sauerstoff, die für die Reduktion nicht nutzbar gemacht wurden, dem Gasgenerator wieder zugesetzt werden müssen. Zur Regenerierung der Waschflüssigkeit in der Sauergasentfernungseinheit wird darüber hinaus Dampf oder eine andere Quelle thermischer Energie benötigt.

Die Erfindung bezweckt die Vermeidung dieser Nachteile und Schwierigkeiten und stellt sich die Aufgabe, ein Verfahren der eingangs bezeichneten Art zu schaffen, welches bei höherer Temperatur durchführbar ist und bei dem die zugeführte Kohle und der zugeführte Sauerstoff besser ausgenützt werden. Ein weiteres Ziel der Erfindung besteht darin, einen wirtschaftlichen Vorteil dadurch zu erzielen, daß die Kohle nicht auf eine bestimmte Korngröße gebrochen werden muß, sondern daß sie in Form von zwei Fraktionen mit feiner und grober Körnung — im wesentlichen so, wie sie angeliefert wird — eingesetzt werden kann.

Die gestellte Aufgabe wird bei einem Verfahren der eingangs definierten Art erfindungsgemäß dadurch gelöst,

- daß die Schwefelakzeptoren und gegebenenfalls weitere Zuschlagstoffe feinteilig gesondert von der Kohle im Gleich- und/oder Gegenstrom zu den wirbelbettbildenden Gasen zugeführt werden,
- daß das Obergas aus dem Reduktionsschachtofen mit einer Konzentration von 15 bis 30 % $CO_2$ und einer Temperatur von 80 bis 800 °C seitlich durch die Wand des Gasgenerators in den Bereich des Wirbelbettes rückgeführt wird, welches auf einer Temperatur von mindestens 1 150 °C gehalten wird,
- daß die bei der im Gasgenerator herrschenden Temperatur schmelzflüssig anfallende — Asche und Schwefelverbindungen enthaltende und sich unter Bildung eines Bades ansammelnde — Schlacke durch einen Abstich in Bodennähe des Generators entfernt wird und
- daß die aus dem Generatorgas abgeschiedenen Feststoffteilchen mit staubförmiger Kohle einer Korngröße von bis 3 mm gemischt und in den Bodenbereich des Gasgenerators oberhalb der Oberfläche des Schlackenbades rückgeführt werden.

Bei dem bekannten Verfahren wird ein teilchenförmiger Schwefelakzeptor zusammen mit der Kohle in den unteren Teil des Gasgenerators eingebracht. Bei dieser Einbringungsart wird der Schwefel nicht ausreichend effektiv aus dem gebildeten Generatorgas entfernt. Als Schwefelakzeptoren kommen beispielsweise Kalkstein, gebrannter Kalk, Kalkhydrat und Dolomit in Frage. Als weitere Zuschlagstoffe zur Steuerung von Menge, Zusammensetzung und Konsistenz des entstehenden Schlackenbades können beispielsweise Sand und/oder Flußspat zugesetzt werden.

Das Generatorgas verläßt den Generator beim erfindungsgemäßen Verfahren mit einer Temperatur von mindestens 950 °C, es weist einen Schwefelgehalt von weniger als 50 TpM und einen Reduktionsgrad

$$R = (H_2 + CO)/(H_2O + CO_2)$$

von 15 bis 30 auf.

Im rückgeführten Obergas aus dem Direktreduktionsschachtofen sind Wasser und $CO_2$ enthalten. Das Kohlendioxid wird im Gasgenerator zum Teil wieder zu Kohlenmonoxid reformiert, der Wassergehalt führt zur Erhöhung des Wasserstoffanteiles im Generatorgas und ermöglicht die Zufuhr einer geringeren Menge an Sauerstoff.

Zweckmäßig wird eine Fraktion der zur Generatorgaserzeugung eingesetzten Kohle mit einer Korngröße von 3 bis 25 mm durch den Kopfteil des Gasgenerators eingebracht. Infolge der hohen, im Gasgenerator herrschenden Temperatur kommt es zu einem spontanen Zerplatzen der grobstückigen Kohleteilchen. Die Korngröße der resultierenden Kohleteilchen läßt deren Integration in das Kohlewirbelbett zu.

Nach einer vorteilhaften Ausführungsform des erfindungsgemäßen Verfahrens wird ein Teil des entstaubten und verdichteten Obergases nach Passieren eines Kältetrockners dem Generatorgas zur Einstellung des Verhältnisses von Kohlenmonoxid zu Kohlendioxid und zur Einstellung einer Temperatur des dabei resultierenden Reduktionsgases im Bereich von 750 bis 1 000 °C zugefügt ; dieses Reduktionsgas wird in den Reduktionsschachtofen eingeleitet.

Durch die Einstellung der Temperatur und des Verhältnisses von CO zu $CO_2$ im Reduktionsgas auf diese Weise ergibt sich die Möglichkeit einer einfachen Anpassung der Reduktionsbedingungen an das dem Direktreduktionsschachtofen zugeführte eisenoxidhältige Material, wie Stückerz, Pellets oder Sinter und weiters die Möglichkeit der Steuerung des Kohlenstoffgehaltes im erzeugten direkt reduzierten Eisen (DRE).

Dabei wird das Obergas insbesondere mit einem Wassergehalt von weniger als 1 % dem Generatorgas zugefügt.

Das beim erfindungsgemäßen Verfahren erhaltene hochmetallisierte Produkt mit einem Metallisierungsgrad von 90 bis 98 % weist einen Schwefelgehalt von nur 0,03 bis 0,05 % auf und sein Kohlenstoffgehalt ist in den Grenzen von etwa 1,0 bis 3,0 % regelbar. Es eignet sich hervorragend als Einsatzmaterial in einem Elektrolichtbogen- oder einem Plasmaofen zur Stahlerzeugung.

Zweckmäßig wird das rückgeführte Obergas vor der Einleitung in den Gasgenerator durch Verbrennen einer anderen Teilmenge des entstaubten Obergases — vorzugsweise auf eine Temperatur von 500 bis 700 °C — vorerhitzt.

Es ist auch möglich, den rückgeführten, entstaubten und verdichteten Teil des Obergases ohne Vorerhitzung dem Gasgenerator zuzuführen. In diesem Fall beträgt die Temperatur des Obergases, welche u. a. vom Verdichtungsgrad abhängt, etwa 80 bis 200 °C. Der Druck im Gasgenerator wird auf einen Wert zwischen 2,5 und 5,5 bar eingestellt. Im Schachtofen herrscht ein Druck von 2 bis 5 bar, wobei der Druck im Generator natürlich immer höher als im Schachtofen gehalten werden muß, und zwar um mindestens 0,3 bar.

Vorteilhaft werden 30 bis 50 % des gesamten anfallenden Obergases zum Gasgenerator rückgeführt.

Ein weiterer Teil kann — wie voranstehend erläutert — zum Vorerhitzen des rückgeführten Obergases verwendet werden und nur eine eventuell noch verbleibende Restmenge verläßt als Überschußgas die Reduktionsanlage.

Nach einer anderen vorteilhaften Ausgestaltung des Verfahrens werden die Schwefelakzeptoren und gegebenenfalls weitere Zuschlagstoffe dem Gasgenerator gleichzeitig an mehreren Stellen zugeführt. Die Zufuhrstellen können sich sowohl im Kopfteil als auch im unteren Teil des Gasgenerators, u. zw. günstigerweise unmittelbar über der Schlackenbadoberfläche, befinden und die feinteiligen, vorzugsweise auf eine Korngröße unter 0,1 mm gemahlenen Schwefelakzeptoren gelangen infolge der von der Kohlenbeschickung unabhängigen Einblasung mit einem Fördergas in innigen Kontakt sowohl mit den Kohleteilchen des Wirbelbettes als auch mit dem gebildeten Generatorgas im Kopfteil des Generators.

Der erzielbare Entschwefelungsgrad ist gegenüber dem bekannten Verfahren bei weitem verbessert. Dementsprechend wird auch der bereits erwähnte, besonders niedrige Schwefelgehalt von nur etwa 0,03 bis 0,05 % im metallisierten Produkt (DRE) erreicht, welches ohne weitere Entschwefelung unmittelbar zur Erzeugung von Qualitätsstählen eingesetzt werden kann.

Die aus dem Generatorgas abgeschiedenen Feststoffteilchen werden zweckmäßig vor der Rückführung in den Gasgenerator abgekühlt, und zwar vor oder gleichzeitig mit der Vermischung mit der Staubkohle. Die Temperatur der Feststoffteilchen bzw. des Gemisches liegt nach der Abkühlung etwa bei 60 °C.

Das Gemisch von aus dem Generatorgas abgeschiedenen Feststoffteilchen und staubförmiger Kohle wird besonders vorteilhaft mit verdichtetem Obergas in den Gasgenerator eingeblasen.

Die Erfindung wird im folgenden anhand des in der Zeichnung dargestellten Anlagenschemas noch näher erläutert.

In den Kopfteil eines Gasgenerators 1 münden Zuleitungen für grobstückige Kohle und für Zuschlagstoffe. Die Kohle wird aus einem Vorratsbehälter 2 mittels eines Schneckenförderers 3 zugesetzt, die Zuschlagstoffe werden aus einem Vorratsbehälter 5 über die Transportschnecke 6 in den Generator 1 gefördert.

Sauerstoffhältiges Gas wird im unteren Teil des Generators durch die Leitung 7 zugeführt und feingemahlene Schwefelakzeptoren aus einem Vorratsbunker 8 werden mit einem Transportgas durch die Zweigleitungen 9, 10 und 11 in den unteren Teil und in den Kopfteil des Generators 1 eingeblasen. Im Generator 1 wird durch geeignete Strömungsgeschwindigkeiten der eingeblasenen Gase ein Kohlewirbelbett aufrechterhalten. Die Temperatur des Wirbelbettes wird auf mindestens 1 150 °C gehalten, wobei die unvergasbaren Ascheanteile der Kohle schmelzflüssig anfallen und die mit den Schwefelakzeptoren gebildeten Verbindungen, wie Calciumsulfid, in die Schlacke übergehen.

Die flüssige Schlacke sammelt sich im Bodenteil des Generators 1 unter Bildung eines Schlackenbades 12 und wird über den Abstich 13 diskontinuierlich abgezogen. Das entstandene Generatorgas verläßt den Kopfteil des Generators 1 durch die Leitung 14 und wird gemäß der dargestellten Ausführungsform in einem Kühler 15 indirekt durch Wärmeaustausch mit Wasser auf eine Temperatur unterhalb der Schlackenerstarrungstemperatur abgekühlt. Anschließend tritt das Generatorgas in eine Staubabscheidungseinheit 16 ein, welche aus mindestens einem Heißzyklon bestehen kann.

Das von mitgeführten Feststoffteilchen befreite Generatorgas wird über die Leitung 17 einem

Direktreduktionsschachtofen 18 zugeführt. Eine Wiedererhitzung des Gases vor der Einleitung in den Schachtofen 18 — wie sie nach dem bekannten Verfahren notwendig ist — entfällt beim erfindungsgemäßen Verfahren. Vor oder nach der Staubabscheidungseinheit 16 kann dem Generatorgas vorteilhaft noch ein gewisser Anteil an entstaubtem und verdichtetem, aus dem Schachtofen 18 rückgeführtem Obergas zugesetzt werden, um die Temperatur und das $CO/CO_2$-Verhältnis des dabei resultierenden Reduktionsgases auf die gewünschten Werte einzustellen. Da das rückgeführte Obergas neben $CO_2$ auch Wasser enthält, wird es dem Generatorgas erst nach Passieren eines Kältetrockners 19 zugesetzt. In der veranschaulichten Ausführungsform mündet die relativ kühles Obergas mit einem Gehalt von vorzugsweise weniger als 1 % Wasser führende Leitung 20 nach der Staubabscheidungseinheit 16 in die Leitung 17 ein. Erfolgt die Zufuhr des kühlen Obergases vor der Einheit 16 in die Leitung 14, so kann die Temperatur in der Einheit 16 zwar niedriger gehalten werden, die Einheit muß jedoch für einen größeren Gasdurchsatz ausgelegt sein.

In den Schachtofen 18 wird von oben eisenoxidhältiges Material 21 chargiert, welches im Gegenstrom mit dem heißen, staubfreien Reduktionsgas in Kontakt kommt und zu einem hochmetallisierten Produkt (DRE) 22 umgesetzt wird. Das erzeugte DRE 22 wird in bekannter Weise entweder kalt mit einer Temperatur von etwa 50 °C oder heiß mit einer Temperatur von etwa 700 bis 800 °C aus dem Schachtofen 18 ausgetragen. Heiß mittels Schnecken ausgetragenes DRE kann nach Entfernung von Kohlenstaub direkt brikettiert werden.

Das zum Teil oxidierte Reduktionsgas verläßt als Obergas den Schachtofen 18 durch die Leitung 23 und gelangt in eine Naßentstaubungsanlage 24, die besonders vorteilhaft mit Heißwasser 25 aus dem Kühler 15 beschickt wird. Auf diese Weise wird das Obergas nicht zu stark abgekühlt, wodurch ein gewisser Feuchtigkeitsgehalt des Obergases gewährleistet ist, welcher wieder zur Temperaturregelung und zur Einsparung von Sauerstoff im Generator 1 sowie zur Erhöhung des Wasserstoffgehaltes im Generatorgas zweckmäßig ist.

Das Obergas erreicht bei der Naßentstaubung eine Temperatur von etwa 50 bis 75 °C und wird in der Leitung 26 gesammelt. Die abgeschiedenen Rückstände 27 können nach der Trocknung wieder in den Schachtofen 18 chargiert werden. Ein Teil des entstaubten, wasserdampfgesättigten und abgekühlten Obergases wird über einen Verdichter 28 und bei der dargestellten Ausführungsform weiters über einen Erhitzer 29 durch die Leitung 30 — zweckmäßig mit mehreren Mündungen in verschiedener Höhe — seitlich durch die Wand des Generators 1 in den Bereich des Wirbelbettes rückgeführt. Ein weiterer Dampfzusatz aus einer externen Dampfquelle erübrigt sich. Das im Obergas enthaltene Kohlendioxid wird im als Reformer wirkenden Generator 1 wieder in Kohlenmonoxid übergeführt. Die Rückführung des Obergases an verschiedenen Stellen des Generators 1 hat den Vorteil, daß der Umsatz der eingebrachten Kohle erhöht und die Staubverluste niedrig gehalten werden.

Soll der rückgeführte Teil des Obergases auf die bevorzugte Temperatur von 500 bis 700 °C vorgeheizt werden, erfolgt dieses Aufheizen im Erhitzer 29 zweckmäßig durch Verbrennen eines weiteren Teiles des entstaubten Obergases aus der strichliert dargestellten Zweigleitung 31 mit sauerstoffhältigem Gas, z. B. mit Luft.

Verbleibt noch ein Rest an Obergas, so wird dieser als Überschußgas 32 aus der Anlage abgeführt, um den Anteil der Inertgase im kreislaufgeführten Gas nicht zu hoch werden zu lassen.

Die aus dem Generatorgas in der Staubabscheidungseinheit 16 abgeschiedenen Feststoffteilchen 33 werden nach Passieren eines Schleusensystems vorteilhaft in einer Kühlschnecke 34 mit staubförmiger Kohle 35 gemischt und dabei gleichzeitig auf eine Temperatur von etwa 60 °C abgekühlt. Das Gemisch 36 wird in den Bodenbereich des Generators 1 rückgeführt, wobei gemäß der Zeichnung besonders zweckmäßig so vorgegangen wird, daß ein Teil des aus dem Verdichter 28 austretenden Obergases in die Leitung 37 abgezweigt und im Kompressor 38 nachverdichtet wird. Das nachverdichtete Obergas tritt gemeinsam mit dem Gemisch 36 in den Suspendierbehälter 39 ein und die dort erzeugte Feststoff-in-Gas-Suspension wird durch die Leitung 40 knapp ober dem Spiegel des Schlackenbades 12 in den Bodenbereich des Gasgenerators 1 eingeblasen. Es hat sich als besonders günstig herausgestellt, die Mündungen der Leitungen für sauerstoffhältiges Gas 7, für die Schwefelakzeptoren 9 und der Leitung 40 etwa in der gleichen Ebene unmittelbar oberhalb der Schlackenbadoberfläche anzuordnen. Die Menge des ausgetragenen Feinanteiles der Kohle wird durch diese Zuführungsart der Staubkohle drastisch verringert.

Die Zuleitung für sauerstoffhältiges Gas kann auch zentral in eine Manteldüse münden, und die Suspension von abgeschiedenen Feststoffteilchen und staubförmiger Kohle kann einer solchen Düse als Mantelfluid zugeführt werden. Die Leitungen für jedes genannte Medium können selbstverständlich mehrfach und deren Mündungen symmetrisch über den Umfang des Generators 1 verteilt vorgesehen sein.

**Patentansprüche**

1. Verfahren zur Direktreduktion von eisenoxidhältigen Materialien mittels eines in einem Gasgenerator (1) durch Umsetzung von Kohle mit Sauerstoff und gegebenenfalls Wasserdampf unter Zusatz von Schwefelakzeptoren in einem Wirbelbett hergestellten Generatorgases, wobei das Generatorgas nach Abscheidung von mitgeführten Feststoffteilchen einem Direktreduktionsschachtofen (18) zugeführt und wenigstens ein Teil des aus dem Direktreduktionsschachtofen abgezogenen

Obergases nach einer Naßentstaubung verdichtet und zum Gasgenerator (1) rückgeführt wird, dadurch gekennzeichnet,

- daß die Schwefelakzeptoren und gegebenenfalls weitere Zuschlagstoffe feinteilig gesondert von der Kohle im Gleich- und/oder Gegenstrom zu den wirbelbettbildenden Gasen zugeführt werden,
- daß das Obergas aus dem Reduktionsschachtofen (18) mit einer Konzentration von 15 bis 30 % $CO_2$ und einer Temperatur von 80 bis 800 °C seitlich durch die Wand des Gasgenerators (1) in den Bereich des Wirbelbettes rückgeführt wird, welches auf einer Temperatur von mindestens 1 150 °C gehalten wird,
- daß die bei der im Gasgenerator (1) herrschenden Temperatur schmelzflüssig anfallende — Asche und Schwefelverbindungen enthaltende und sich unter Bildung eines Bades (12) ansammelnde — Schlacke durch einen Abstich (13) in Bodennähe des Generators (1) entfernt wird und
- daß die aus dem Generatorgas abgeschiedenen Feststoffteilchen mit staubförmiger Kohle einer Korngröße von bis 3 mm gemischt und in den Bodenbereich des Gasgenerators (1) oberhalb der Oberfläche des Schlackenbades (12) rückgeführt werden.

2. Verfahren nach Anspruch 1, dadurch gekennzeichnet, daß eine Fraktion der zur Generatorgaserzeugung eingesetzten Kohle mit einer Korngröße von 3 bis 25 mm durch den Kopfteil des Gasgenerators (1) eingebracht wird.

3. Verfahren nach wenigstens einem der Ansprüche 1 und 2, dadurch gekennzeichnet, daß ein Teil des entstaubten und verdichteten Obergases nach Passieren eines Kältetrockners (19) dem Generatorgas zur Einstellung des Verhältnisses von Kohlenmonoxid zu Kohlendioxid und zur Einstellung einer Temperatur des dabei resultierenden Reduktionsgases im Bereich von 750 bis 1 000 °C zugefügt und dieses Reduktionsgas in den Reduktionsschachtofen (18) eingeleitet wird.

4. Verfahren nach Anspruch 3, dadurch gekennzeichnet, daß das Obergas mit einem Wassergehalt von weniger als 1 % dem Generatorgas zugefügt wird.

5. Verfahren nach einem oder mehreren der Ansprüche 1 bis 4, dadurch gekennzeichnet, daß das rückgeführte Obergas vor der Einleitung in den Gasgenerator (1) durch Verbrennen einer anderen Teilmenge des entstaubten Obergases — vorzugsweise auf eine Temperatur von 500 bis 700 °C — vorerhitzt wird.

6. Verfahren nach einem oder mehreren der Ansprüche 1 bis 5, dadurch gekennzeichnet, daß 30 bis 50 % des gesamten anfallenden Obergases zum Gasgenerator (1) rückgeführt werden.

7. Verfahren nach einem oder mehreren der Ansprüche 1 bis 6, dadurch gekennzeichnet, daß die Schwefelakzeptoren und gegebenenfalls weitere Zuschlagstoffe dem Gasgenerator (1) gleichzeitig an mehreren Stellen zugeführt werden.

8. Verfahren nach einem oder mehreren der Ansprüche 1 bis 7, dadurch gekennzeichnet, daß aus dem Generatorgas abgeschiedene Feststoffteilchen (33) vor der Rückführung in den Gasgenerator (1) abgekühlt werden.

9. Verfahren nach einem oder mehreren der Ansprüche 1 bis 8, dadurch gekennzeichnet, daß das Gemisch (36) von aus dem Generatorgas abgeschiedenen Feststoffteilchen (33) und staubförmiger Kohle (35) mit verdichtetem Obergas in den Gasgenerator (1) eingeblasen wird.

**Claims**

1. Process for the direct reduction of iron-oxide-containing materials by means of a gasification gas produced in a gasifier (1) by reacting carbon with oxygen and, if desired, with steam, upon the addition of sulfur acceptors in a fluidized bed, wherein the gasification gas is supplied to a direct reduction shaft furnace (18) after separation of solid particles carried therewith and at least part of the top gas withdrawn from the direct reduction shaft furnace is compressed after dust scrubbing and is recycled to the gasifier (1), characterised in that

- the sulfur acceptors and, if desired, further fluxes, are supplied as fine particles separate from the coal in cocurrent with, and/or counterflow to, the fluidized-bed forming gases,
- the top gas from the reduction shaft furnace (18), which has a concentration of from 15 to 30 % $CO_2$ and a temperature of from 80 to 800 °C, is recycled laterally through the wall of the gasifier (1) into the region of the fluidized bed, which is maintained at a temperature of at least 1,150 °C,
- the slag, which is in the molten state with the temperature prevailing in the gasifier (1) - containing ashes and sulfur compounds and collecting under the formation of a bath (12) - is removed via a tap (13) provided in the vicinity of the bottom of the gasifier (1), and
- the solid particles separated from the gasification gas are mixed with dust coal having a grain size of up to 3 mm and are recycled into the bottom region of the gasifier (1) above the surface of the slag bath (12).

2. Process according to claim 1, characterised in that a fraction of the coal used for the production of gasification gas, which has a grain size of from 3 to 25 mm, is introduced through the top part of the gasifier (1).

3. Process according to at least one of claims 1 and 2, characterised in that a portion of the dedusted and compressed top gas is added to the gasification gas after having passed a refrigeration drier (19), to adjust the ratio of carbon monoxide to carbon dioxide and to adjust the temperature of the resulting reduction gas to be in a range of from 750 to 1,000 °C, and this reduction gas is introduced into the reduction shaft furnace (18).

4. Process according to claim 3, characterised in that the top gas is added to the gasification gas with a water content of less than 1 %.

5. Process according to one or more of claims 1 to 4, characterised in that the recycled top gas is

preheated prior to being introduced into the gasifier (1) by burning another partial amount of the dedusted top gas — preferably to a temperature of between 500 and 700 °C -.

6. Process according to one or more of claims 1 to 5, characterised in that 30 to 50 % of the total top gas formed is recycled to the gasifier (1).

7. Process according to one or more of claims 1 to 6, characterised in that the sulfur acceptors, and, if desired, additional fluxes are supplied to the gasifier (1) simultaneously at several points.

8. Process according to one or more of claims 1 to 7, characterised in that solid particles (33) separated from the gasification gas are cooled prior to being recycled into the gasifier (1).

9. Process according to one or more of claims 1 to 8, characterised in that the mixture (36) of solid particles (33) separated from the gasification gas and of dust coal (35) is blown into the gasifier (1) with compressed top gas.

**Revendications**

1. Procédé pour la réduction directe de matières contenant des oxydes de fer à l'aide d'un gaz de générateur préparé dans un générateur à gaz (1) par réaction du charbon avec l'oxygène et le cas échéant de la vapeur d'eau, avec adjonction d'accepteurs de soufre, dans un lit tourbillonnaire, dans lequel le gaz de générateur, après séparation des particules de matières solides entraînées, est envoyé dans un four à cuve de réduction directe (18) et une partie au moins des gaz de tête évacués du four à cuve de réduction directe est comprimée après un dépoussiérage au mouillé et recyclée au générateur à gaz (1), caractérisé en ce que :

- les accepteurs de soufre et le cas échéant les autres additifs sont introduits, à l'état de fines particules, séparément du charbon, en courant parallèle et/ou à contre-courant des gaz formant le lit tourbillonnaire,

- les gaz de tête sortant du four à cuve de réduction (18) à une concentration en $CO_2$ de 15 à 30 % et à une température de 80 à 800 °C sont recyclés latéralement au travers de la paroi du générateur à gaz (1) dans la région du lit tourbillonnaire qui est maintenue à une température d'au moins 1 150 °C,

- les scories qui sont à l'état liquide et fluide à la température régnant dans le générateur à gaz (1) - qui contiennent les cendres et les composés du soufre et se rassemblent en formant un bain (12) - sont évacuées par une percée (13) au voisinage du fond du générateur (1) et

- les particules de matières solides séparées du gaz de générateur sont mélangées avec du charbon en poudre, à une dimension de grain allant jusqu'à 3 mm, et recyclées dans la région de fond du générateur à gaz (1), au-dessus de la surface du bain de scories (12).

2. Procédé selon la revendication 1, caractérisé en ce qu'une fraction du charbon utilisé pour la production du gaz de générateur, à une dimension de grain de 3 à 25 mm, est introduite dans la partie de tête du générateur à gaz (1).

3. Procédé selon au moins une des revendications 1 et 2, caractérisé en ce qu'une partie des gaz de tête dépoussiérée et comprimée, après passage dans un séchoir — réfrigérant (19), est ajoutée au gaz de générateur pour réglage d'une proportion relative entre l'oxyde de carbone et l'anhydride carbonique et pour réglage d'une température du gaz réducteur ainsi obtenu dans l'intervalle de 750 à 1000 °C, et ce gaz réducteur est envoyé dans le four à cuve de réduction (18).

4. Procédé selon la revendication 3, caractérisé en ce que les gaz de tête sont ajoutés au gaz de générateur à une teneur en humidité inférieure à 1 %.

5. Procédé selon une ou plusieurs des revendications 1 à 4, caractérisé en ce que les gaz de tête recyclés, avant introduction dans le générateur à gaz (1), sont préchauffés, de préférence à une température de 500 à 700 °C, par combustion d'une autre partie des gaz de tête dépoussiérés.

6. Procédé selon une ou plusieurs des revendications 1 à 5, caractérisé en ce que l'on recycle au générateur à gaz (1) de 30 à 50 % des gaz de tête totaux formés.

7. Procédé selon une ou plusieurs des revendications 1 à 6, caractérisé en ce que les accepteurs de soufre et le cas échéant les autres additifs sont introduits dans le générateur à gaz (1) simultanément en plusieurs endroits.

8. Procédé selon une ou plusieurs des revendications 1 à 7, caractérisé en ce que les particules de matières solides (33) séparées du gaz de générateur sont refroidies avant recyclage dans le générateur à gaz (1).

9. Procédé selon une ou plusieurs des revendications 1 à 8, caractérisé en ce que le mélange (36) des particules de matières solides (33) séparées du gaz de générateur et du charbon en poudre (35) est insufflé dans le générateur à gaz (1) à l'aide des gaz de tête comprimés.

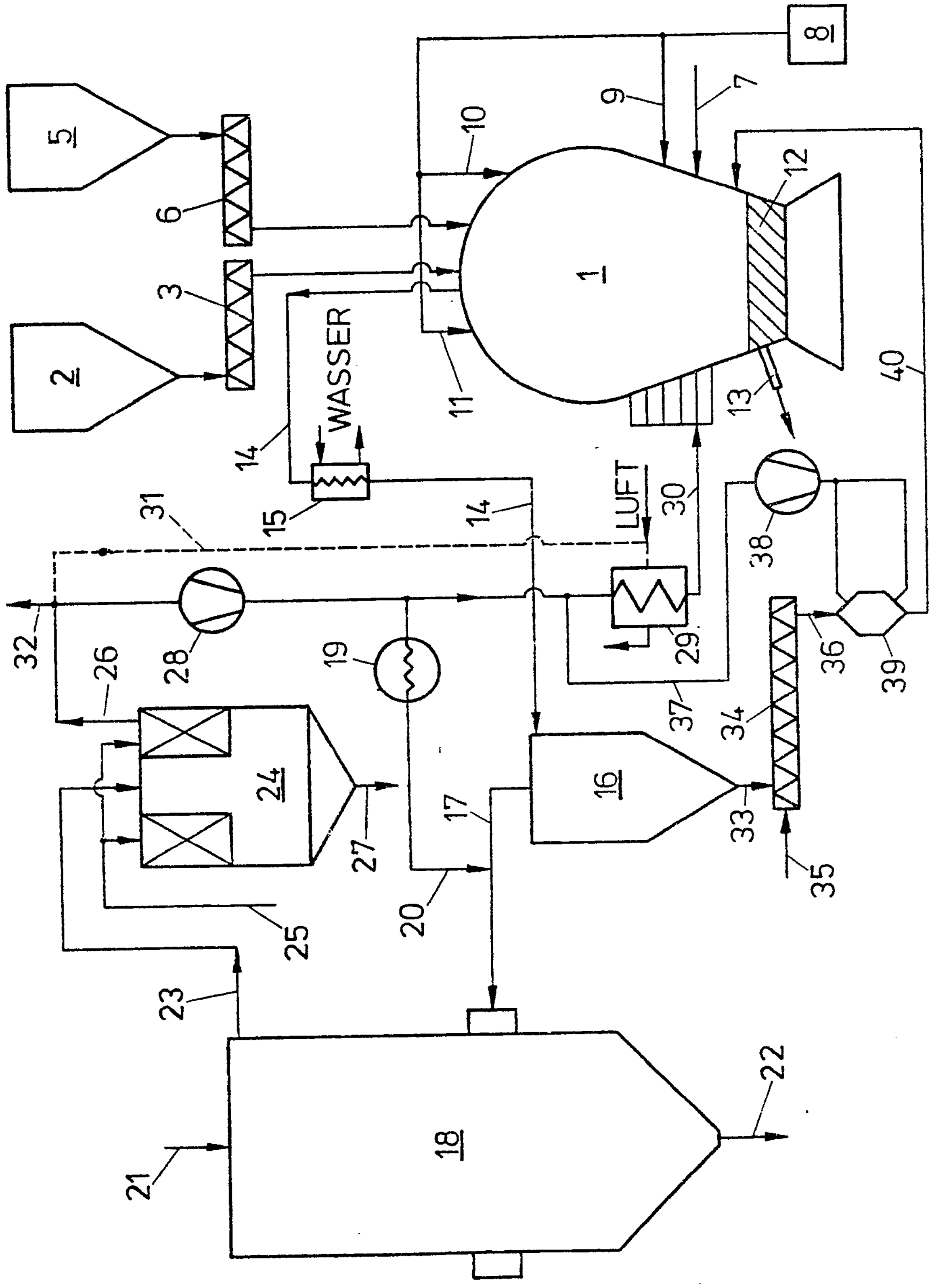
1
2
3
5
6
7
8
9
10
11
12
13
14
15
16
17
18
19
20
21
22
23
24
25
26
27
28
29
30
31
32
33
34
35
36
37
38
39
40
WASSER
LUFT